# EUROPÄISCHE PATENTSCHRIFT

(11) **EP 0 440 039 B1**
(45) Veröffentlichungstag und Bekanntmachung des Hinweises auf die Patenterteilung: **15.12.1993**
(21) Anmeldenummer: 91100465.3
(22) Anmeldetag: 16.01.1991
(51) Int. Cl.: A22C 11/10, A22C 11/12

(54) **Verfahren und Vorrichtung zum Herstellen von Würsten in einer zusammenhängenden Kette und zum Trennen in einzelne Würste oder in Gruppen von zusammenhängenden Würsten**
Method and device for stuffing sausages in a string and for dividing into single sausages or into groups of connected sausages
Procédé et dispositif pour la fabrication de saucisses en chapelet et pour leur division en saucisses séparées ou en groupes de saucisses connectées

(30) Priorität: 31.01.1990 DE 9001075 U
(43) Veröffentlichungstag der Anmeldung: 07.08.1991
(73) Patentinhaber: Albert Handtmann Maschinenfabrik GmbH & Co. KG, D-88400 Biberach (DE)
(72) Erfinder: Staudenrausch, Georg, W-7950 Biberach 1 (DE); Müller, Gerhard, W-7957 Schemmerhofen 2 (DE)
(74) Vertreter: Grünecker, Kinkeldey, Stockmair & Schwanhäusser Anwaltssozietät

(56) Entgegenhaltungen:
- EP-A- 0 392 083
- DE-A- 2 605 745
- DE-A- 3 104 099
- DE-A- 3 323 659
- DE-A- 3 408 859
- FR-A- 2 214 413

## Beschreibung

Die Erfindung betrifft ein Verfahren bzw. eine Vorrichtung zum Herstellen von Würsten in einer zusammenhängenden Kette und zum Trennen in einzelne Würste oder Gruppen von zusammenhängenden Würsten nach dem Oberbegriff des Anspruchs 1 bzw. 5.

Durch die DE-A- 31 04 099 ist eine solche Vorrichtung bekannt geworden. Dort wird der von einer Füllmaschine herkommende Wurststrang zwischen zwei Endlosbändern einer Transporteinrichtung vorwärtsbewegt. Auf jedem der Endlosbänder sind Verdrängerelemente befestigt, die sich im Bereich der Umlenkräder der Endlosbänder treffen und dabei den Wurststrang durch örtliches Zusammenquetschen abteilen. Dem Transportband nachgeschaltet ist eine Trennvorrichtung, die zwei parallel im Abstand zueinander angeordnete, der Wurstkette jeweils gegenüberliegende, synchron gegenläufig sich drehende Antriebswellen umfaßt, die quer zur Transportrichtung der Wurstkette angeordnet sind und jeweils mindestens einen radial von den Antriebswellen abstehenden Trennarm aufweisen, welche Trennarme beim Trennvorgang sich begegnend in der Weise zusammenwirken, daß die Trennarme auf der einen Antriebswelle mit Mesern versehen sind, während die Trennarme der anderen Antriebswelle Gegenhalter aufweisen, beim Abtrennvorgang nähert sich die Schneide des Messers dem Gegenhalter und durchtrennt dabei die Abteilung zwischen zwei Würsten. Die Endlosbänder sind durch einen Zahnriemen mit dem Antriebsrad der einen Antriebswelle der Trennvorrichtung verbunden, wobei die Antriebswellen untereinander durch Zahnräder in Verbindung stehen.

Somit ist gewährleistet, daß die Trennarme mit den Verdrängerelementen synchron laufen und das Trennen der Würste immer im Einschnürbereich erfolgt. Die Ausbildung der Trennvorrichtung in Form von gegenläufig synchron angetriebenen Trennarmen mit Messer und Gegenhalter führt zu dem Vorteil, daß das Messer und der Gegenhalter die gleiche Geschwindigkeit aufweisen wie die Wurstkette, so daß Messer und Gegenhalter in der Art einer Verzahnung mit der jeweiligen Einschnürung zwischen zwei Würsten zusammenwirken.

Wenn bei einer solchen Vorrichtung die Länge der Würste geändert werden soll oder die Zahl der Würste innerhalb einer Gruppe, müssen verhältnismäßig schwierige und aufwendige mechanische Anderungen vorgenommen werden.

Der Erfindung liegt das technische Problem zugrunde, ein Verfahren und eine Vorrichtung anzugeben, wonach ein exaktes Trennen der Würste unabhängig von der Länge der Würste, von der Zahl der zusammenhängenden Würste und der Wursttransportgeschwindigkeit ohne aufwendige Umrüstmaßnahmen erfolgen kann.

Diese Aufgabe wird durch die kennzeichnenden Merkmale des Anspruchs 1 bzw. 5 gelöst.

Mit diesen Maßnahmen wird erreicht, daß sowohl die Länge der Würste als auch die Zahl der in der Gruppe zusammenhängenden Würste rasch und einfach geändert werden kann, ohne daß das exakte Trennen der Würste beeinträchtigt werden würde.

Das Verfahren kann noch weiter verbessert werden, wenn die Würste vor dem Abdrehen durch Verdrängerelelemnte unterteilt werden, die wie die Trennelemente in Transportrichtung gegenläufig und synchron auf je einer Kreisbahn gegenüber umlaufen und deren Umlaufgeschwindigkeit während ihres funktionslosen Umlaufes veränderbar ist, jedoch im Eingriffsbereich der Wursttransportgeschwindigkeit angepaßt wird.

So ist es möglich, die Wurstkette in einzelne Würste zu unterteilen, wobei die Trennelemente und die Verdrängerelemente mit gleicher Geschwindigkeit umlaufen, oder die Wurstkette in Gruppen von zusammenhängenden Würsten zu unterteilen, indem die Umlaufgeschwindigkeit der Trennelemente gegenüber der Umlaufgeschwindigkeit der Verdrängerelemente verringert wird.

Weitere Merkmale und Vorteile der Erfindung ergeben sich aus den Neben- und Unteransprüchen in Verbindung mit der Beschreibung und der Zeichnung von Ausführungsbeispielen.

In der Zeichnung zeigen:
- Figur 1: schematisch die Vorrichtung in Seitenansicht,
- Figur 2: ebenfalls im Schema die Trenneinrichtung in Draufsicht,
- Figur 3: den Eingriff von zwei zusammenwirkenden Messern,
- Figur 4: eine Einzelheit der Messer,
- Figur 5: eine abgeänderte Ausbildung der Trenneinrichtung in Draufsicht
- Figur 6: den Eingriff eines Messers mit einem Gegenhalter gemäß der Trenneinrichtung nach Figur 5,
- Figur 7: den verzahnungsartigen Eingriff der Trennmesser in eine Einschnürung zwischen zwei Würsten,
- Figur 8: eine weitere abgeänderte Ausbildung der Trenneinrichtung in Draufsicht und
- Figur 9: eine Einzelheit dazu.

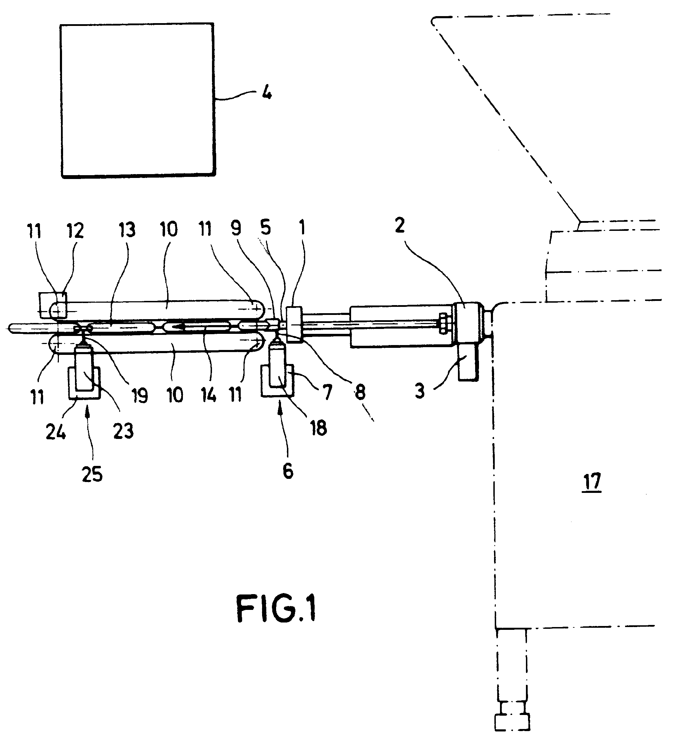

In Figur 1 ist strichpunktiert die mit 17 bezeichnete Füllmaschine dargestellt, aus welcher kontinuierlich das Füllgut in Strangform austritt und in der üblichen Weise in die Hülle eingefüllt wird. Der so geschaffene Wurststrang 5 wird durch die zentrische Öffnung eines Bremsringes 1 gefördert, der durch ein Abdrehgetriebe 2 in Drehung versetzt werden kann und dabei den Wurststrang 5 mitdreht.

Das Addrehgetriebe 2 wird von einem Elektromotor 3 angetrieben, der von einer elektronischen Steuerung 4 drehzahlgereget wird.

Unmittelbar nach dem Bremsring 1 gelangt der Wurststrang 5 bei dem gezeichneten Ausführungsbeispiel zu einer Abteileinrichtung, die aus zwei Verdrängereinheiten 6 besteht. Die beiden Verdrängereinheiten 6 sind mit einem Elektromotor 7 verbunden, der ebenfalls von der elektronischen Steuerung 4 drehzahlgeregelt wird.

Der Elektromotor 7 ist mit einem Getriebe 18 zusammengebaut, welches zwei Antriebswellen 8 aufweist. Auf jeder Antriebswelle 8 ist ein Verdrängerelement 9 aufgesteckt und damit starr verbunden (im einzelnen nicht gezeichnet).

Der Abteileinrichtung ist eine Transporteinrichtung nachgeschaltet, die aus zwei Endlosförderbändern 10 besteht. Die Förderbänder 10 sind um Umlenkräder 11 geführt, von denen welche als Antriebsräder mit einem drehzahlregelbaren Elektromotor 12 verbunden sind, der wiederum von der elektronischen Steuerung 4 geregelt wird.

Die Förderbänder 10 laufen im Gegensinn um und transportieren die abgeteilten Würste 13 in Pfeilrichtung 14 ab. Dabei werden die Würste 13 durch die Förderbänder 10 an einer Drehung gehindert.

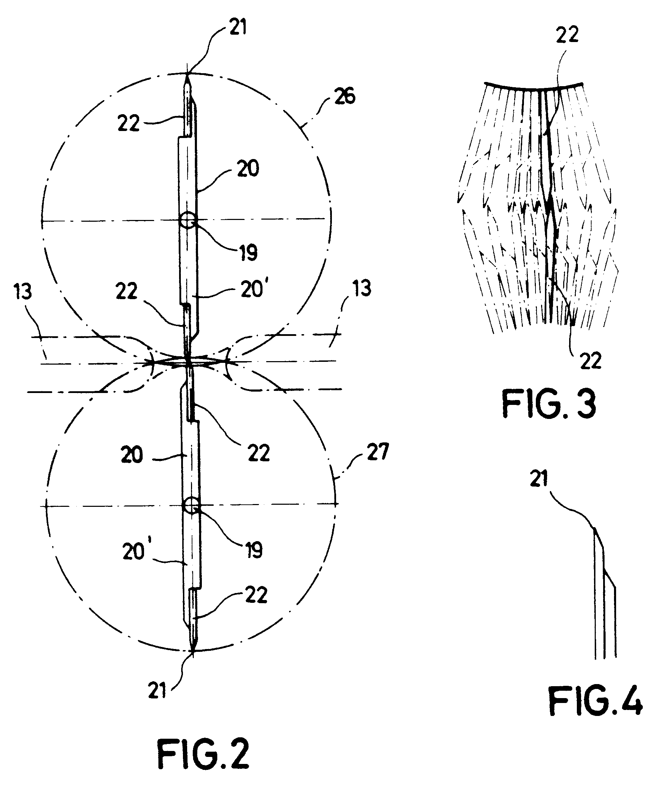

Wie aus den Figuren 1 und 2 ersichtlich ist, besteht der Antrieb der Trenneinrichtung aus zwei parallel im Abstand zueinander angeordnete, der Wurstkette jeweils gegenüberliegende, synchron gegenläufig sich drehende Antriebswellen 19, die quer zur Transportrichtung der Wurstkette angeordnet sind.

Im gezeichneten Ausführungsbeispiel gemäß Figur 2 sind am Ende einer jeden Antriebswelle 19 zwei Trennarme 20 und 20' radial gegenüberliegend angeordnet. Jeder Trennarm 20 bzw. 20' trägt an seinem freien Ende ein mit seiner Schneide 21 radial nach außen gerichtetes Messer 22.

Die Antriebswellen 19 sind Bestandteil eines Getriebes 23, welches mit einem in seiner Drehzahl durch die Steuerung 4 elektronisch regelbaren Elektromotor 24 zusammengebaut ist.

Die insgesamt mit 25 bezeichnete Trenneinrichtung kann somit genauso aufgebaut sein wie die Verdrängereinheit 6. Dabei kann die Trenneinrichtung 25 durch die Steuerung 4 beispielsweise in Abhängigkeit von der Verdrängereinheit 6 gesteuert werden.

Wie aus Figur 2 ersichtlich, überlappen sich die Flugkreise 26 und 27 der Messer 22, wobei die Überlappung vorteilhaft etwa 1 bis 2 mm betragen kann.

In Figur 3 ist gezeigt, wie sich die Messer 22 im Trennbereich begegnen und dabei zusammenwirken.

Die Messer 22 befinden sich vor dem Trennvorgang in einer Schrägstellung der Trennarme 20 und 20', wobei die Enden der Messer 22 bereits in einer solchen Schrägstellung einer Einschnürung zwischen zwei Würsten 13 gegenüberstehen.

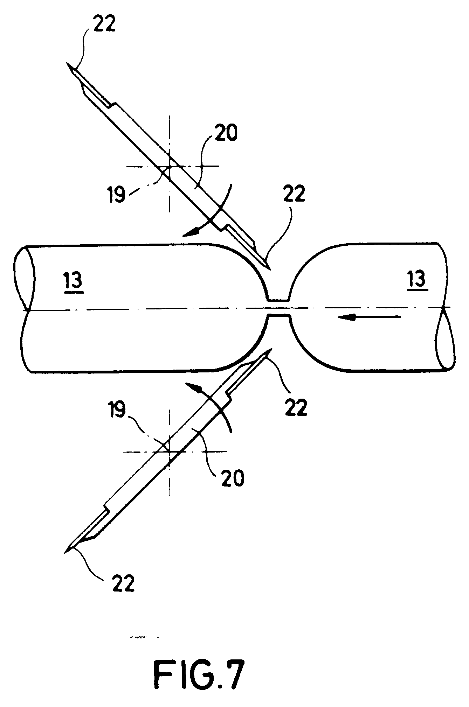

Diese Stellung ist in Figur 3 nicht enthalten, sie ist aber in der Figur 7 dargestellt.

In der Figur 3 sind die beiden zusammenwirkenden Messer 22 kurz vor dem Trennschnitt und kurz danach in strichpunktierten Linien in aufeinanderfolgenden Stellungen gezeigt. Beim Schnitt selbst, in welcher Stellung die beiden Messer 22 in ausgezogenen Linien gezeichnet sind, können sich die Messer bis auf einen minimalen Abstand von etwa 0,1 mm nähern. Dabei ist eines der Messer 22 gegenüber dem anderen etwas versetzt, so daß sie durch die Trennstellung hintereinander hindurchgehen. Dabei hat sich ein durch die beiden Schneidflächen gebildeter Winkel von etwa 20° besonders gut bewährt.

Die Schneidflächen können symmetrisch angeschliffen sein, wie dies in Figur 3 gezeigt ist.

Der Anschliff kann aber auch einseitig erfolgen, wie in Figur 4 beispielsweise dargestellt.

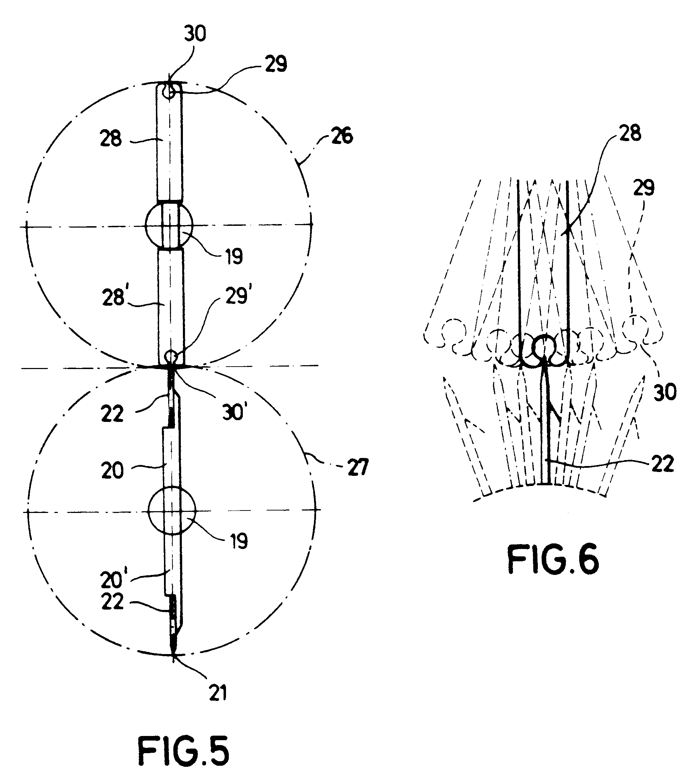

Bei der in Figur 5 schematisch dargestellten Trenneinrichtung ist eine der Antriebsachsen 19 wieder mit zwei diametral gegenüberliegenden radial nach außen abstehenden Trennarmen 20 und 20' mit jeweils einem Messer 22 versehen.

Die andere Antriebsachse 19 weist jedoch zwei Gegenhalter 28 und 28' auf, die ebenfalls gegenüberliegend radial nach außen ragen. Sie weisen jeweils am Ende eine randoffene Ausnehmung 29 bzw. 29' auf, die jeweils in einen offenen Schlitz 30 bzw. 30' mündet.

Der Schlitz 30 bzw. 30' weist vorteilhaft eine Breite von etwa 1 bis 2 mm auf, wobei die Schneide 21 des jeweiligen Messers 22 etwa 1 mm in den Schlitz 30 bzw. 30' eintaucht.

In Figur 6 ist diese Stellung des Messers 22 bzw. des Gegenhalters 28' schematisch gezeigt. In strichpunktierten Linien sind die verschiedenen Stellungen der Messer und Gegenhalter vor und nach dem Schnitt dargestellt.

Die Ausbildung der randoffenen Ausnehmung 29 bzw. 20' und der Gegegenhalter 28 bzw. 28' ermöglicht es, die Gegenhalter aus Kunststoff zu fertigen.

Dies ist im übrigen auch bezüglich der Trennarme 20 möglich.

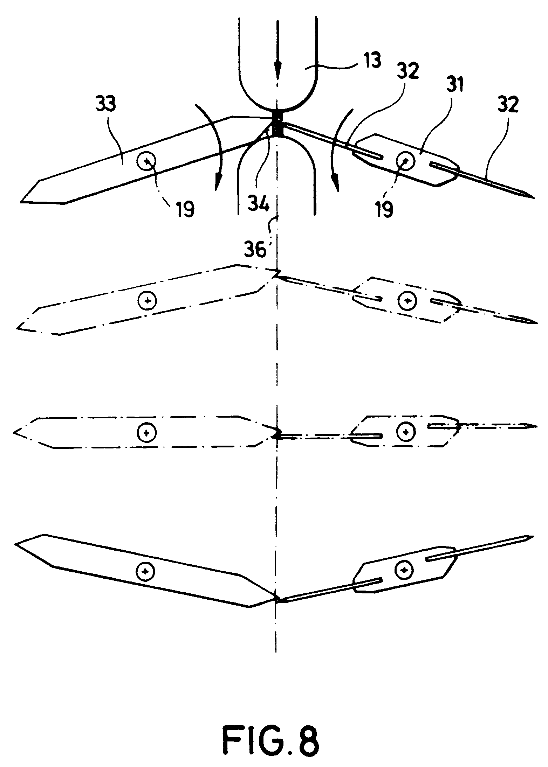

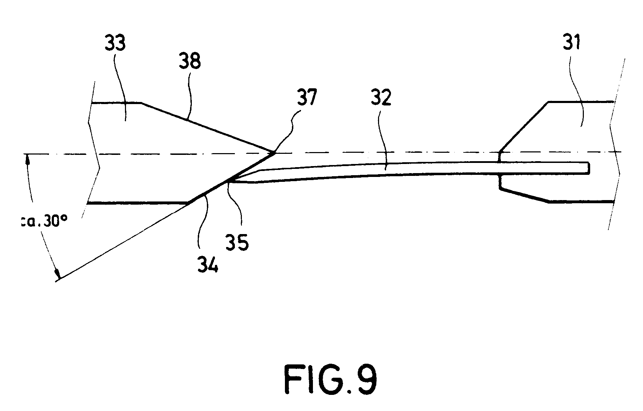

Bei der in den Figuren 8 und 9 schematisch dargestellten Trenneinrichtung trägt eine der Antriebsachsen 19 mindestens einen Trennarm 31, an welchem ein Messer 32befestigt ist, das z.B. aus Bandstahl gefertigt sein kann, d.h. das Messer 32 ist federnd ausgebildet.

Wie aus Figur 9 ersichtlich, ist die Schneide 35 des Messers 32 durch einen einseitigen Anschliff dargestellt. Auf der anderen Antriebswelle 19 ist mindestens ein Gegenhalter 33 angebracht, der eine Schrägfläche 34 aufweist. Das Zusammenwirken der Messerschneide 35 mit der Schrägfläche 34 ist in Figur 8 gezeigt. Bei der durch die Pfeile angedeuteten Drehung nähert sich die Schneide 35 an der Einschnürstelle der Schrägfläche 34. Trennarm 31 und Gegenhalter 33 bilden mit ihren Mittellinien dabei einen stumpfen Winkel. Bei der weiteren Drehung des Messers 32 und des Gegenhalters 33 trifft die Schneide 35 auf die Schrägfläche 34 und wandert auf dieser vorwärts, bis das Messer 32 mit der Mittellinie des Gegenhalters 33 sich in einer gestreckten Lage befinden. Diese Zwischenstellungen sind in der Figur 8 strichpunktiert dargestellt.

Die Schneide 35 legt sich dabei infolge der Ausgestaltung des Messers 32 als Blattfeder federnd an die Schrägfläche 34 an.

Die Flugkreise der vorderen Kante des Gegenhalters 33 und der Schneide 35 überlappen sich so, daß sie jeweils die strichpunktiert eingezeichnete Mittellinie 36 etwa 0,5 mm bis 1,5 mm überragen.

Der Gegenhalter 33 ist im gezeichneten Ausführungsbeispiel an seinem vorderen Ende gegenüber der Schrägfläche 34 so abgeschrägt, daß sich eine Kante 37 ergibt, die auch als Schneidkante ausgebildet sein kann. Diese mit 38 bezeichnete Abschrägung führt aber auch zu dem Vorteil, daß die Würste in ihren Endbereichen beim Eingriff der Trennarme nicht beschädigt werden.

Wennn lange Würste oder mehrere zusammenhängende Würste erzielt werden, ist es vorteilhaft, pro Antriebswelle 19 nur einen einzigen Trennarm anzuordnen, wobei auch hier entweder die zusammenwirkenden Trennarme mit jeweils einem Messer bestückt sind oder aber einem Messer ein Gegenhalter gegenübersteht.

Die gesamte Vorrichtung arbeitet wie folgt:

Der von der Füllmaschine 17 kommende Wurststrang 5 wird durch den Bremsring 1, der über das Getriebe 2 durch den Elektromotor 3 angetrieben wird, in Drehung versetzt.

Die gegensinnig umlaufenden Verdrängerelemente 9 kommen mit dem Wurststrang 5 in Eingriff, wobei ihre Drehzahl so geregelt ist, daß die Umlaufgeschwindigkeit ihres Kreuzungspunktes mit der Fortschreitgeschwindigkeit des Wurststranges 5 im wesentlichen übereinstimmt, die durch die Endlosbänder 10 erzwungen wird.

Der Wurststrang 5 dreht sich während des Einengens durch die Verdrängerelemente 9 noch so lang, bis das vordere, bereits abgedrehte Ende der Wurst 13 von den Endlosbändern 10 erfaßt wird und eine weitere Einschnürung bei der folgenden Portion erfolgt. Nachdem sich der rückwärtige Wurststrang 5 weiter dreht, erfolgt dabei ein Abdrehen des rückwärtigen Endes der Wurst.

Die elektronische Steuerung 4 regelt die Umlaufgeschwindigkeit der Verdrängerelemente 9, je nachdem, in welcher Länge die Würste hergestellt werden sollen.

Die abgeteilten, aber zusammenhängenden Würste werden zwischen den Endlosförderbändern 10 der Trenneinrichtung 25 zugeführt. Der Elektromotor 24 der Trenneinrichtung 25 ist in seiner Drehzahl während des Umlaufes der Trennarme durch die elektronische Steuerung 4 regelbar bzw. steuerbar.

Damit die Trenneinrichtung, beispielsweise die Messer 22 genau an der gewünschten Einschnürung zwischen zwei Würsten 13 in die Schnittstellung gelangen, können sie in Abhängigkeit von der Stellung der Verdrängerelemente 9 entsprechend gesteuert werden.

Außerdem kann die Umdrehungsgeschwindigkeit der Trennarme 20 durch die Steuereinrichtung 4 so gesteuert werden, daß entweder eine Trennung bei jeder Einschnürung erfolgt oder aber erst nach Passieren einer Gruppe von Würsten in einer bestimmten Anzahl. Dann regelt die Steuereinrichtung 4 die Umlaufgeschwindigkeit der Trennarme 20 während ihres funktionslosen Teilumlaufes entsprechend weit herab, ggf. bis auf Null.

Nur während des Trennvorganges bzw. des Verdrängervorganges wird die Umlaufgeschwindigkeit der Trennarme 20 bzw. Verdrängerelemente 9 so geregelt, daß sie in etwa mit der Fortschreitgeschwindigkeit der Endlosbänder 10 übereinstimmt. Ein solcher Gleichlauf wird bereits herbeigeführt, wenn die Trennarme bzw. Verdrängerelemente in einer Schrägstellung einer Einschnürung zwischen zwei Würsten gegenüberstehen. Dies ist aus der Figur 7 ersichtlich. Die Mittelachsen der Trennarme 20 schließen dabei einen Winkel von etwa 90° ein, wobei die Messer 22 in der Art einer Verzahnung in die Einschnürung zwischen zwei Würsten eingreifen und vom Eingriff an ewa synchron mit der Transportbewegung der Würste umlaufen.

In Extremfällen ist es auch möglich, die Trennarme in einem bestimmten Winkelbereich vor dem Trennvorgang noch schneller laufen zu lassen als die Fortschreitgeschwindigkeit der Endlosbänder 10 und danach wieder zu verlangsamen.

Die Länge der Trennarme, d.h. der Flugkreisdurchmesser 26 der Schneiden 21, richtet sich nach dem Kaliber der zu trennenden Würste. Sehr günstig hat sich bei Kalibern zwischen 13 und 40 mm ein Flugkreisdurchmesser von etwa 80 mm und kleiner erwiesen, weil dabei Wurstkaliber in einer verhältnismäßig großen Variationsbreite zugrundegelegt werden können. bei größeren Kalibern sollte der Flugkreisdurchmesser entsprechend größer sein. Gegenüber bisher bekannten Trennvorrichtungen kann eine wesentlich höhere Anzahl Portionen pro Minute getrennt werden.

Die maximal mögliche Trennleistung ist abhängig von folgenden Parametern:
Portionslänge
Transportbandgeschwindigkeit
Anzahl der zusammenhängenden Portionen
Achsabstand der Wellen mit den Trennelementen
Anzahl der Trennelemente je Welle (1 oder 2)
Eingriffwinkel der Trennelemente in den Wurststrang
Maximal zulässige Radialbeschleunigung bzw.
Verzögerung.

Dabei ist zu erwähnen, daß selbstverständlich auch der Antrieb für die Endlosförderbänder 10 in Form des Elektromotors 12 in seiner Drehzahl durch die Steuerung 4 regelbar ist, ebenso der das Abdrehetriebe 2 antreibende Elektromotor 3 wie in der Figur gezeichnet. So können alle Bewegungsvorgänge programmiert optimal aufeinander abgestimmt werden.

Je nach Portionslänge, Transportbandgeschwindigkeit und Anzahl der zusammenhängenden Portionen ist der Drehzahlverlauf außerhalb des Eingriffsbereiches der Trennelemente bzw. Verdrängerelemente beschleunigt oder verzögert. Bei längeren oder mehreren zusammenhängenden Portionen wird der Antrieb für bestimmte Zeit in einer Referenzstellung gestoppt.

## Patentansprüche

1. Verfahren zum Herstellen von Würsten in einer zusammenhängenden Kette und zum Trennen in einzelne Würste oder in Gruppen von zusammenhängenden Würsten, wobei in einer Füllmaschine der Wurststrang hergestellt und anschließend in einer Abdrehvorrichtung in zusammenhängende Würste unterteilt werden, diese an einer Drehung gehindert und mit einer bestimmten Fördergeschwindigkeit weiterbefördert und dabei in gestreckter Stellung gehalten werden, in welcher sie durch Trennelemente getrennt werden, die in Transportrichtung gegenläufig und synchron auf je einer Kreisbahn auf gegenüberliegenden Seiten des Wurststranges umlaufen, **dadurch** **gekennzeichnet,** daß die Umlaufgeschwindigkeit des Trennelemente während ihres funktionslosen Teilumlaufes veränderbar ist, jedoch im Eingriffsbereich der Wursttransportgeschwindigkeit angepaßt wird.

2. Verfahren nach Anspruch 1, wobei die Würste vor dem Abdrehen durch Verdrängerelemente unterteilt werden, die wie die Trennelemente in Transportrichtung gegenläufig und synchron auf je einer Kreisbahn gegenüber umlaufen und deren Umlaufgeschwindigkeit während ihres funktionslosen Umlaufes veränderbar ist, jedoch im Eingriffsbereich der Wursttransportgeschwindigkeit angepaßt wird.

3. Verfahren nach Anspruch 2, wobei die Wurstkette in einzelne Würste unterteilt wird und die Trennelemente und die Verdrängerelemente mit gleicher Geschwindigkeit umlaufen.

4. Verfahren nach Anspruch 2 bis 3, wobei die Wurstkette in Gruppen von zusammenhängenden Würsten unterteilt wird, indem die Umlaufgeschwindigkeit der Trennelemente gegenüber der Umlaufgeschwindigkeit der Verdrängerelemente verringert wird.

5. Vorrichtung zum Durchführen des Verfahrens nach Anspruch 1 bestehend aus einer Füllmaschine (17), aus einer an der Füllmaschine angesetzten Abdrehvorrichtung, aus einer sich an diese anschließenden Transporteinrichtung und aus einer im Bereich der Transporteinrichtung angeordneten Trenneinrichtung mit einem Antrieb (25) die zwei parallel im Abstand zueinander auf gegenüberliegenden Seiten der Bewegungsbahn der Wurstkette angeornete, synchron gegenläufig sich drehende Antriebswellen (19) umfaßt, die quer zur Bewegungsrichtung der Transportrichtung der Wurstkette (13) angeordnet sind und jeweils mindestens einen radial davon abstehenden Trennarm (20 bzw. 28) aufweisen zum Trennen der Würste bei der Begegnung der Trennarme in der Art einer Verzahnung mit der jeweiligen Einschnürung zwischen zwei Würsten **dadurch** **gekennzeichnet,** daß der Antrieb der Trenneinrichtung (25) mit einer die Drehzahl des Antriebes während des Umlaufes regelnden elektronischen oder hydraulischen Steuerung (4) verbunden ist, um die Umlaufgeschwindigkeit während des funktionslosen Teilumlaufs zu verändern und im Eingriffsbereich der Wursttransportgeschwindigkeit anzupassen.

6. Vorrichtung nach Anspruch 5, **dadurch gekennzeichnet**, daß in Transportrichtung der Würste gesehen nach der Abdrehvorrichtung eine den Wurststrang abteilende Verdrängereinheit (6) vorgesehen ist, die wie die Trenneinrichtung jedoch mit Verdrängerelementen (9) ausgebildet ist und deren Antrieb (7) mit der die Drehzahl desselben in Abhängigkeit von der Drehzahl der Trennarme (20, 20') regelnden Steuerung (4) verbunden ist.

7. Vorrichtung nach Anspruch 5, **dadurch gekennzeichnet**, daß der elektrische Antrieb für die Trenneinrichtung (25) aus einem drehzahlregelbaren Elektromotor (24) und einem Getriebe (23) mit den zwei Antriebswellen (19) besteht.

8. Vorrichtung nach Anspruch 6, **dadurch gekennzeichnet**, daß der elektrische Antrieb für die Verdrängereinheiten (6) aus einem drehzahlregelbaren Elektromotor (7) und einem Getriebe (18) mit den zwei Antriebswellen (8) besteht.

9. Vorrichtung nach Anspruch 5, **dadurch gekennzeichnet**, daß die Trenneinrichtung (25) im Bereich der Endlosförderbänder (10) angeordnet ist.

10. Vorrichtung nach Anspruch 5, **dadurch gekennzeichnet**, daß der Antrieb für die Endlosförderbänder (10) als drehzahlregelbarer Elektromotor (12) ausgebildet ist, der mit der elektrischen Steuerung (4) in Verbindung steht.

11. Vorrichtung nach Anspruch 5, **dadurch gekennzeichnet**, daß jeder Trennarm (20, 20') mit einem Messer versehen ist, wobei sich die Flugkreise (26 und 27) der Messer überlappen und das eine Messer gegenüber dem anderen damit zusammenwirkende Messer um etwa 1° versetzt angetrieben ist.

12. Vorrichtung nach Anspruch 11, **dadurch gekennzeichnet**, daß die Überlappung der Flugkreise (26 und 27) etwa 1 bis 2 mm beträgt.

13. Vorrichtung nach Anspruch 5, **dadurch gekennzeichnet**, daß einer der Trennarme (20) mit einem Messer (22) versehen ist und der andere Trennarm als Gegenhalter (28) mit einer radial offenen Randausnehmung (29) für den Messereingriff ausgebildet ist.

14. Vorrichtung nach Anspruch 13, **dadurch gekennzeichnet**, daß die randoffene Ausnehmung (29) im Gegenhalter (28) eine Schlitzbreite von etwa 1 bis 2 mm aufweist.

15. Vorrichtung nach Anspruch 13, **dadurch gekennzeichnet**. daß der Gegenhalter aus Kunststoff ausgebildet ist.

16. Vorrichtung nach Anspruch 5, **dadurch gekennzeichnet**, daß einer der Trennarme (31) mit einem Messer (32) versehen ist und der andre Trennarm als Gegenhalter (33) mit einer Schrägfläche (34) ausgebildet ist, auf welcher die Schneide (35) des Messers (32) während des Trennvorganges radial gleitet.

17. Vorrichtung nach Anspruch 16, **dadurch gekennzeichnet**, daß das Messer (32) oder der Gegenhalter (33) federnd ausgebildet ist.

18. Vorrichtung nach Anspruch 5, **dadurch gekennzeichnet**, daß der Flugkreisdurchmesser (26, 27) jedes Trennarmes (20 bzw. 28 bzw. 28') bei einem Wurstkaliberbereich von 13 bis 40 mm kleiner als 80 mm ist.

## Claims

1. Method for the manufacture of sausages in a continuous string and for separation into individual sausages or groups of connected sausages, wherein in a stuffing machine the sausage strand is manufactured and then in a twist-off device it is divided into connected sausages, the latter are prevented from turning and advanced at a given speed of conveying and at the same time kept in an in-line position in which they are separated by cutting elements which counterrotate in the direction of conveying synchronously each in a circular path on opposite sides of the sausage strand, characterised in that the speed of rotation of the cutting elements can be varied during functionless partial rotation thereof, but is adapted to the speed of conveying the sausages in the region of engagement.

2. Method according to claim 1, wherein the sausages are divided before twisting off by positive-displacement elements which, like the cutting elements, counterrotate synchronously in the direction of conveying each in a circular path and of which the speed of rotation can be varied during functionless rotation thereof, but is adapted to the speed of conveying the sausages in the region of engagement.

3. Method according to claim 2, wherein the string of sausages is divided into individual sausages and the cutting elements and positive-displacement elements rotate at the same speed.

4. Method according to claims 2 to 3, wherein the string of sausages is divided into groups of connected sausages, by reducing the speed of rotation of the cutting elements relative to the speed of rotation of the positive-displacement elements.

5. Apparatus for carrying out the method according to claim 1, consisting of a stuffing machine (17), a twist-off device attached to the stuffing machine, a conveying device adjoining the latter, and a cutting device with a drive (25) which is arranged in the region of the conveying device and which includes two parallel, spaced-apart, synchronously counterrotating drive shafts (19) which are arranged on opposite sides of the path of movement of the string of sausages and which are arranged transversely to the direction of conveying the string of sausages (13) and each comprise at least one cutting arm (20 or 28) projecting radially therefrom for separating the sausages when the cutting arms meet in the manner of meshing with the respective constriction between two sausages, characterised in that the drive of the cutting device (25) is connected to an electronic or hydraulic control means (4) which regulates the speed of the drive during rotation, to vary the speed of rotation during functionless partial rotation and to adapt it to the speed of conveying the sausages in the region of engagement.

6. Apparatus according to claim 5, characterised in that behind the twist-off device as seen in the direction of conveying the sausages is provided a positive-displacement unit (6) which divides the sausage strand and which, like the cutting device, is however constructed with positive-displacement elements (9) and of which the drive (7) is connected to the control means (4) which regulates the speed thereof as a function of the speed of the cutting arms (20, 20').

7. Apparatus according to claim 5, characterised in that the electric drive for the cutting device (25) consists of a variable-speed electric motor (24) and a gear mechanism (23) with the two drive shafts (19).

8. Apparatus according to claim 6, characterised in that the electric drive for the positive-displacement units (6) consists of a variable-speed electric motor (7) and a gear mechanism (18) with the two drive shafts (8).

9. Apparatus according to claim 5, characterised in that the cutting device (25) is arranged in the region of the endless conveyor belts (10).

10. Apparatus according to claim 5, characterised in that the drive for the endless conveyor belts (10) is constructed as a variable-speed electric motor (12) which is connected to the electric control means (4).

11. Apparatus according to claim 5, characterised in that each cutting arm (20, 20') is provided with a blade, wherein the flight circles (26 and 27) of the blades overlap and one blade is driven offset by about 1° from the other blade cooperating therewith.

12. Apparatus according to claim 11, characterised in that the overlap of the flight circles (26 and 27) is about 1 to 2 mm.

13. Apparatus according to claim 5, characterised in that one of the cutting arms (20) is provided with a blade (22) and the other cutting arm is constructed as a countersupport (28) with a radially open edge recess (29) for blade engagement.

14. Apparatus according to claim 13, characterised in that the open-edged recess (29) in the countersupport (28) has a slot width of about 1 to 2 mm.

15. Apparatus according to claim 13, characterised in that the countersupport is made of plastic.

16. Apparatus according to claim 5, characterised in that one of the cutting arms (31) is provided with a blade (32) and the other cutting arm is constructed as a countersupport (33) with a sloping surface (34) over which the cutting edge (35) of the blade (32) slides radially during the cutting operation.

17. Apparatus according to claim 16, characterised in that the blade (32) or the countersupport (33) is of resilient construction.

18. Apparatus according to claim 5, characterised in that the flight circle diameter (26, 27) of each cutting arm (20 or 28 or 28') with a sausage calibre range of 13 to 40 mm is less than 80 mm.

## Revendications

1. Procédé pour la fabrication de saucisses en chapelet et pour leur séparation en saucisses individuelles ou en groupes de saucisses reliées entre elles, dans lequel le boudin à saucisses est fabriqué dans une machine de remplissage et ensuite divisé dans un mécanisme de dégagement par torsion en saucisses reliées entre elles, puis les saucisses sont empêchées de tourner et continuent d'être transportées à une vitesse déterminée en étant maintenues dans une position étendue dans laquelle elles sont séparées les unes des autres par des organes séparateurs qui tournent dans la direction de transport en sens inverse l'un par rapport à l'autre et de façon synchrone chacun sur sa voie circulaire et de deux côtés opposés du boudin à saucisses, caractérisé en ce que la vitesse de rotation des organes séparateurs est variable, durant leur trajet de rotation exempt de fonctionnement, mais s'adapte, dans la région de mise en prise, à la vitesse de transport des saucisses.

2. Procédé selon la revendication 1, les saucisses étant, avant d'être dégagées par torsion, divisées par des organes déplaceurs qui, comme les organes séparateurs, tournent dans la direction de transport, en sens inverse l'un de l'autre et de façon synchrone chacun sur une voie circulaire opposée, et dont la vitesse de rotation est variable, au cours de leur trajet de rotation exempt de fonctionnement, et s'adapte, dans la région de mise en prise, à la vitesse de transport des saucisses.

3. Procédé selon la revendication 2, le chapelet de saucisses étant divisé en saucisses individuelles et les organes séparateurs et les organes déplaceurs tournant à la même vitesse.

4. Procédé selon la revendication 2 ou 3, le chapelet de saucisses étant divisé en groupes de saucisses reliées entre elles du fait que la vitesse de rotation des organes séparateurs est réduite par rapport à la vitesse de rotation des organes déplaceurs.

5. Dispositif pour la mise en oeuvre du procédé de la revendication 1, constitué d'une machine de remplissage (17), d'un mécanisme de dégagement par torsion rapporté à la machine de remplissage, d'un transporteur faisant suite au mécanisme de dégagement par torsion et d'un mécanisme de coupe (25) lequel, monté dans la région du transporteur et muni d'un mécanisme d'entraînement, comprend deux arbres d'entraînement (19) qui, disposés parallèlement à une certaine distance l'un de l'autre de deux côtés opposés de la voie de déplacement du chapelet de saucisses et tournant en synchronisme en sens inverse l'un de l'autre, sont montés transversalement à la direction de transport du chapelet de saucisses (13) et comportent chacun au moins un bras séparateur (20 ; 28) s'étendant radialement à partir de l'arbre respectif afin de séparer les saucisses au moment où les bras séparateurs viennent en prise, à la manière d'un engrènement, avec le resserrement respectif entre deux saucisses, caractérisé en ce que le mécanisme d'entraînement du mécanisme de coupe (25) est relié à une unité de commande électronique ou hydraulique (4) réglant la vitesse de rotation du mécanisme d'entraînement durant la rotation, afin de faire varier la vitesse de rotation, durant le trajet de rotation exempt de fonctionnement, et de l'adapter, dans la région de mise en prise, à la vitesse de transport des saucisses.

6. Dispositif selon la revendication 5, caractérisé en ce que, pour un observateur regardant dans le sens de transport des saucisses, en aval du mécanisme de dégagement par torsion est prévu un ensemble déplaceur (6) qui, divisant le boudin à saucisses, est réalisé comme le mécanisme de coupe avec cependant des organes déplaceurs (9) et dont le mécanisme d'entraînement (7) est relié à l'unité de commande (4) qui régle la vitesse de rotation de ce dernier en fonction de la vitesse de rotation des bras séparateurs (20, 20').

7. Dispositif selon la revendication 5, caractérisé en ce que le mécanisme de commande électrique pour le mécanisme de coupe (25) est constitué par un moteur électrique (24) à vitesse de rotation réglable et par un mécanisme de transmission (23) équipé des deux arbres d'entraînement (19).

8. Dispositif selon la revendication 6, caractérisé en ce que le mécanisme de commande électrique pour les organes déplaceurs (6) est constitué d'un moteur électrique à vitesse de rotation réglable (7) et d'un mécanisme de transmission (18) muni des deux arbres d'entraînement (8).

9. Dispositif selon la revendication 5, caractérisé en ce que le mécanisme de coupe (25) est disposé dans la région des bandes transporteuses sans fin (10).

10. Dispositif selon la revendication 5, caractérisé en ce que le mécanisme d'entraînement pour les bandes transporteuses sans fin (10) est réalisé sous la forme d'un moteur électrique (12) à vitesse de rotation réglable qui est relié à l'unité de commande électronique (4).

11. Dispositif selon la revendication 5, caractérisé en ce que chaque bras séparateur (20, 20') est muni d'une lame, l'agencement étant tel que les cercles (26 et 27) décrits par les lames se chevauchent et que l'une des lames soit entraînée en étant décalée, par rapport à l'autre lame coopérant avec elle, d'environ 1°.

12. Dispositif selon la revendication 11, caractérisé en ce que le chevauchement des cercles (26 et 27) décrits par les lames est d'environ 1 à 2 mm.

13. Dispositif selon la revendication 5, caractérisé en ce que l'un des bras séparateurs (20) est muni d'une lame (22) et l'autre bras séparateur est réalisé en tant qu'organe complémentaire (28) présentant un évidement marginal radialement ouvert (29) pour l'engagement de la lame.

14. Dispositif selon la revendication 13, caractérisé en ce que l'évidement à bord ouvert (29) de l'organe complémentaire (28) présente une largeur de fente d'environ 1 à 2 mm.

15. Dispositif selon la revendication 13, caractérisé en ce que l'organe complémentaire est en matière plastique.

16. Dispositif selon la revendication 5, caractérisé en ce que l'un des bras séparateurs (31) est muni d'une lame (32) et l'autre bras séparateur est réalisé en tant qu'organe complémentaire (33) présentant un biseau (34) sur lequel le tranchant (35) de la lame (32) glisse radialement lors du processus de coupe.

17. Dispositif selon la revendication 16, caractérisé en ce que la lame (32) ou l'organe complémentaire (33) est élastiquement déformable.

18. Dispositif selon la revendication 5, caractérisé en ce que le diamètre (26, 27) du cercle décrit par chaque bras séparateur (20 ; 28 ; 28') est inférieur à 80 mm pour un éventail de grosseurs de saucisse de 13 à 40 mm.
